# EUROPEAN PATENT SPECIFICATION

(11) **EP 0 754 246 B1**
(45) Date of publication and mention of the grant of the patent: **25.04.2001**
(21) Application number: 96903980.9
(22) Date of filing: 05.02.1996
(51) Int. Cl.: C21C 5/46, C21C 5/52

(54) **APPARATUS FOR INJECTING GASES OR FLUIDS IN GENERAL AND PARTICULATES, PARTICULARLY FOR INJECTING OXYGEN, IN FURNACES FOR THE PRODUCTION OF STEEL**
VORRICHTUNG ZUM EINBLASEN VON GASEN ODER FLUIDEN STOFFEN UND KÖRNIGEN STOFFEN, INSBESONDERE ZUM EINBLASEN VON SAUERSTOFF IN ÖFEN ZUR STAHLERZEUGUNG
APPAREIL D'INJECTION DE GAZ OU DE FLUIDES SOUS FORME NORMALE OU PARTICULAIRE ET NOTAMMENT D'INJECTION D'OXYGENE DANS DES FOURS DE PROCUCTION D'ACIER

(30) Priority: 06.02.1995 IT MI950209
(43) Date of publication of application: 22.01.1997
(73) Proprietor: ELTI S.r.l., 24060 Sovere (Bergamo) (IT)
(72) Inventor: MACARIO, Federico, 24065 Lovere (IT)
(74) Representative: Modiano, Guido, Dr.-Ing.
(86) International application number: EP9600462
(87) International publication number: WO9624697

(56) References cited:
- EP-A- 0 146 213
- WO-A-86/02437
- DE-A- 1 433 628
- DE-C- 3 301 466
- FR-A- 1 438 390
- PATENT ABSTRACTS OF JAPAN vol. 009, no. 306 (C-317), 3 December 1985 & JP,A,60 141814 (SURII TEII:KK;OTHERS: 01), 26 July 1985,

## Description

### Technical Field

The present invention relates to an apparatus for injecting gases or fluids in general and particulates, particularly for injecting oxygen, in furnaces for the production of steel.

### Background Art

The production of steel with electric furnaces uses lances to inject oxygen or coal dust; said lances are inserted through appropriate openings formed in the lateral surface of the body of the furnace or shaft.

Oxygen is generally injected directly after loading the scrap iron, so as to cut and gradually heat the scrap to facilitate its melting, and during refinement.

During the injection of oxygen to cut and heat the scrap, the jet of oxygen delivered by the lance must be as parallel as possible to a horizontal plane, so as to achieve greater efficacy in cutting and heating, whereas during the refinement process the angle of impact of the oxygen jet against the free surface of the molten metal, below the slag, must be as high as possible to achieve the desired efficacy and avoid sprays of molten metal above its free surface.

The lances for injecting oxygen in furnaces that are currently in use are generally constituted by an elongated body with an oxygen dispensing nozzle that is tilted downwards at an angle of usually 35-37°. The body of the lance is supported, so that it can oscillate on a vertical plane, by a structure that allows the lance to be swung only downward starting from the horizontal position. By utilizing this possibility of oscillation of the lance, it is possible to vary the angle of the oxygen jet, with respect to a horizontal plane, from a minimum of 35-37°, used during scrap cutting and heating, to a maximum of 47-50°, used during refining.

The supporting structure of the lance also allows to swing said lance about a vertical axis. This possibility of oscillation is used during scrap cutting and heating to affect a considerable amount of scrap with the oxygen jet.

In conventional apparatuses, the oscillation of the lance, both on the vertical plane and about the vertical axis, is performed manually by an operator who must pay particular attention to the maneuvering of the lance, to prevent it from suffering damage as a consequence of impacts against the lower wall and the side walls that delimit the furnace opening through which the lance is inserted, and to prevent the tip of the lance from moving excessively close to the scrap during its cutting and heating. Impacts against the upper wall of the opening formed in the shaft are prevented by the inability of the lance to oscillate upwards.

The use of oxygen injection apparatuses in furnaces for the production of steel has pointed out several problems.

A first problem is constituted by the considerable value (35-37°) of the minimum angle formed by the delivered oxygen jet with a horizontal angle during the cutting and heating of the scrap introduced in the furnace. Indeed, in greater efficacy to the cutting and to the heating of the scrap.

Another problem is constituted by the fact that since the lance cannot oscillate upwards and is placed at the maximum possible height to allow to achieve a high angle of impact with the molten metal during refinement, during the cutting and heating of the scrap with the lance arranged horizontally, its tip is very close to the scrap that is sliding down, with the possibility of electric discharges between the scrap and the lance which have the effect of damaging the lance, causing losses of the cooling water circulating inside the body of the lance. These losses of water are extremely dangerous, as they can cause explosions, whose intensity is proportional to the extent of the water loss, especially during the refinement stage.

Another problem is constituted by the fact that conventional apparatuses require constant care and high skill on the operator's part to avoid damage to the lance during use.

FR-1,438,390 discloses an apparatus for injecting gases or fluids in furnaces, as defined in the preamble of claim 1.

WO86/02437A discloses a manipulator at furnaces and the like, in which the movement of the lance is however only an upward movement with respect to a horizontal plane.

The aim of the present invention is to solve the above mentioned problems by providing an apparatus for injecting gases or fluids in general and particulates, particularly for injecting oxygen, in furnaces for the production of steel, which allows to vary the delivery angle of the gas or fluid with respect to a horizontal plane over a variation range that is significantly wider than that allowed by conventional apparatuses.

Within the scope of this aim, an object of the invention is to provide an apparatus that allows to deliver a jet of oxygen at an extremely small angle, relative to a horizontal plane, so as to achieve higher efficacy during cutting and heating of the scrap introduced in the furnace.

Another object of the invention is to provide an apparatus that allows to increase, with respect to conventional apparatuses, the impact angle of the oxygen jet with respect to the liquid metal bath, achieving higher efficacy in the decarburization of steel during refinement.

Another object of the invention is to provide an apparatus having high operating safety without requiring constant care and particular experience on the part of the operator assigned to its actuation.

This aim, these objects, and others which will become apparent hereinafter are achieved by an apparatus for injecting gases or fluids in general and particulates, particularly for injecting oxygen, in furnaces for the production of steel, as defined in claim 1.

Further characteristics and advantages of the apparatus according to the invention will become apparent from the description of a preferred but not exclusive embodiment of the apparatus according to the invention, illustrated only by way of non-limitative example in the accompanying drawings, wherein:

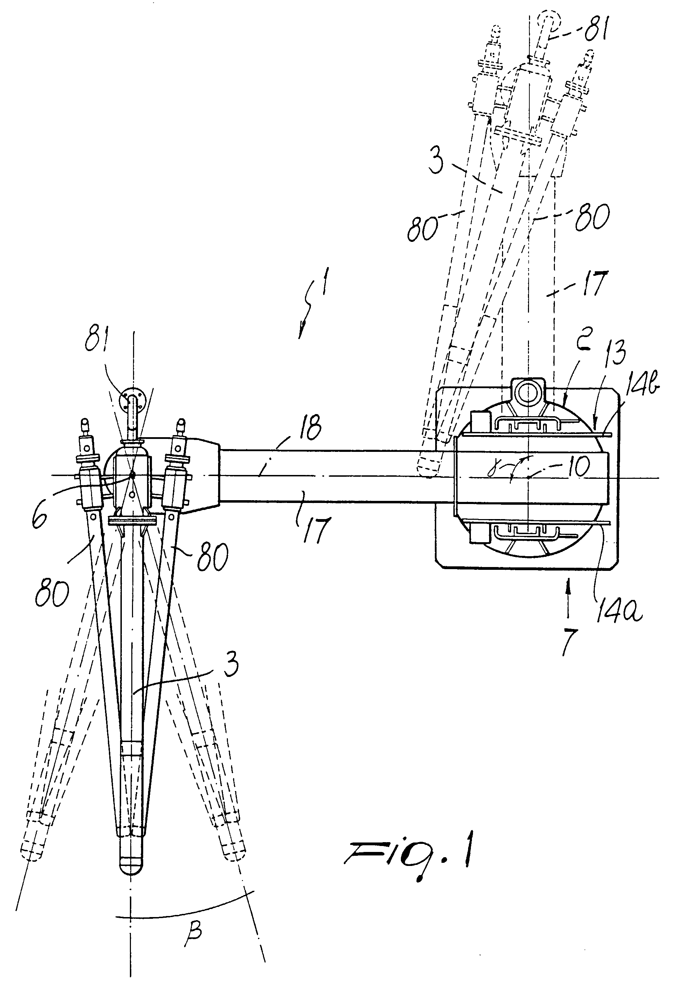

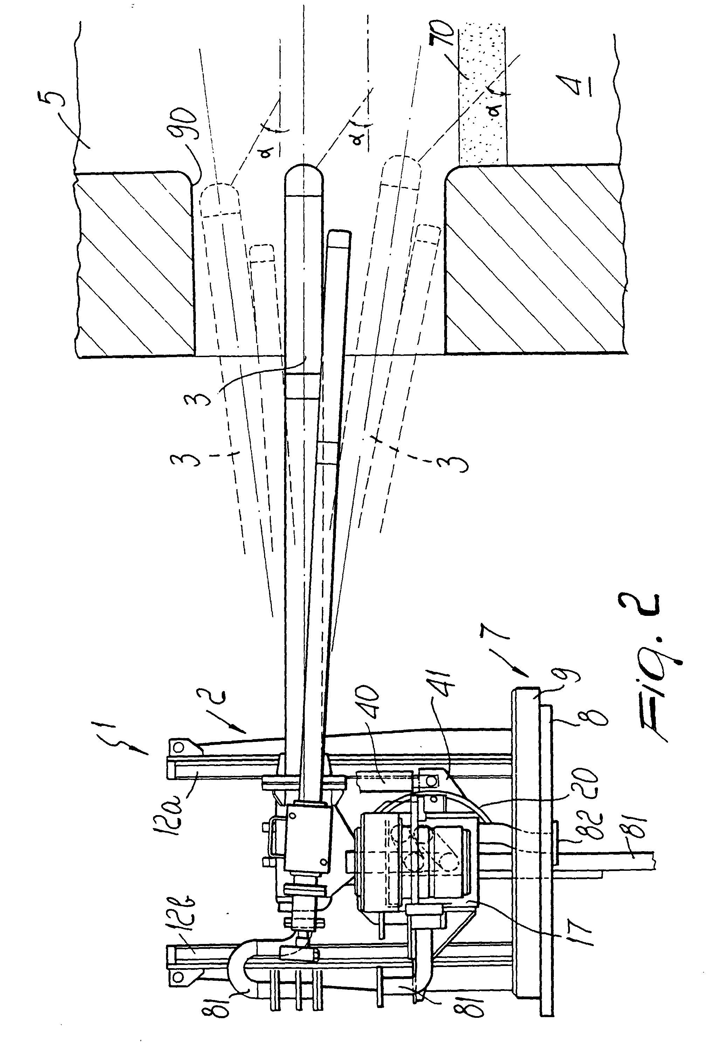

figure 1 is a schematic top plan view of the apparatus according to the invention;

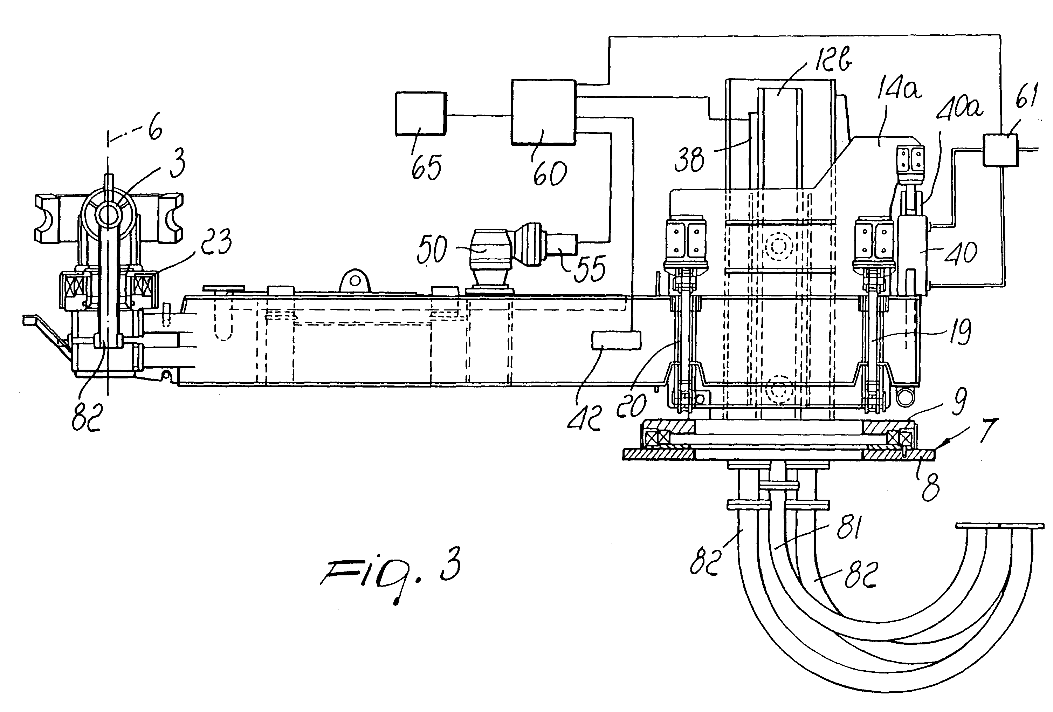

figure 2 is a schematic front elevation view of the apparatus according to the invention;

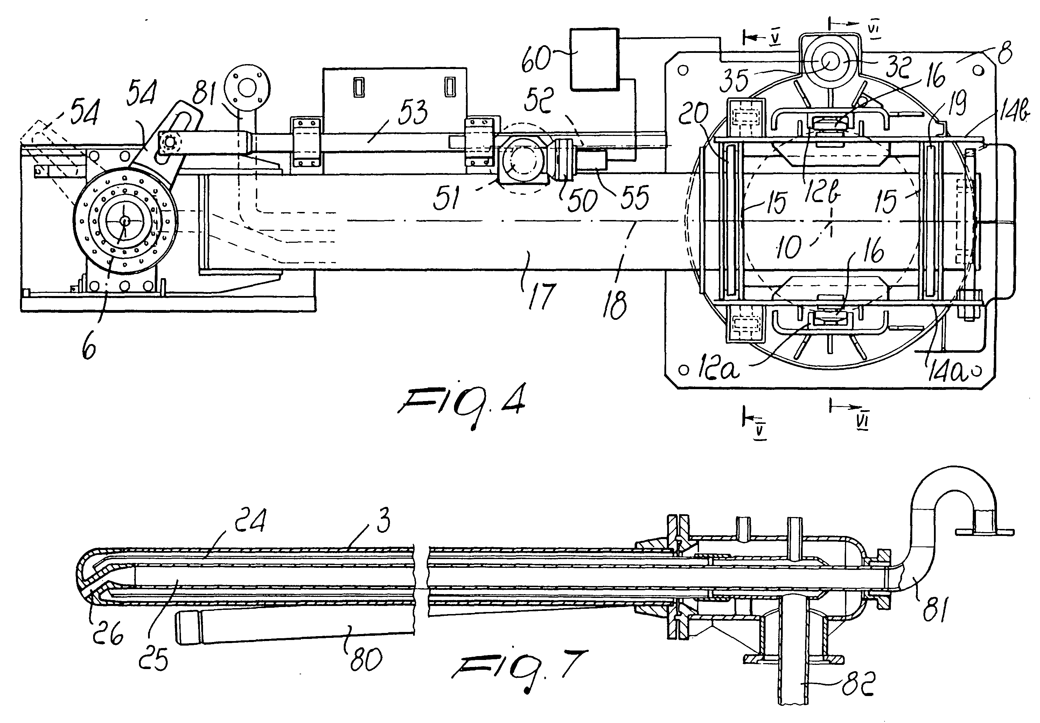

figure 3 is a schematic lateral elevation view of the apparatus according to the invention, with a vertical guide of the supporting structure removed for greater clarity;
figure 4 is a schematic plan view of the apparatus with some elements removed for greater clarity;

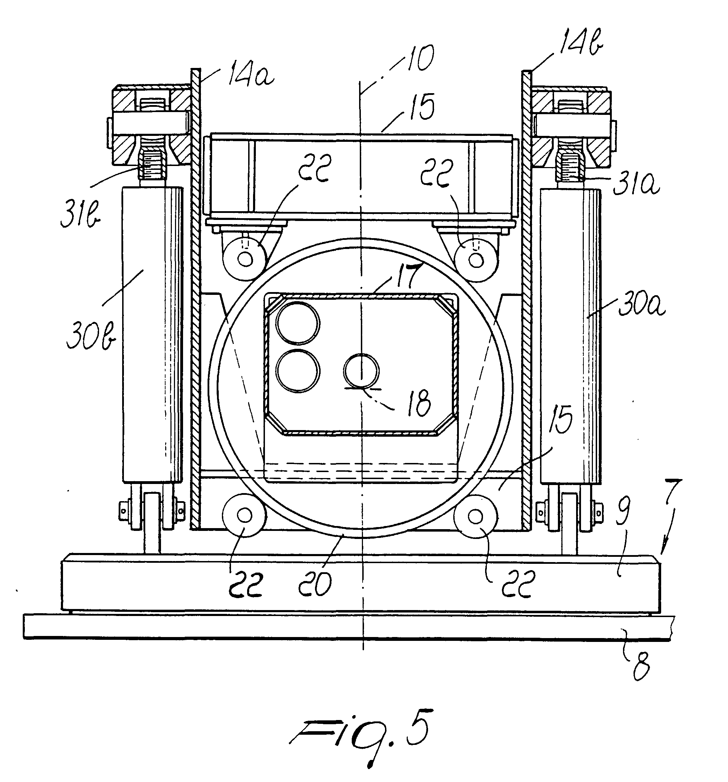

figure 5 is a schematic enlarged-scale sectional view of figure 4, taken along the plane V-V;

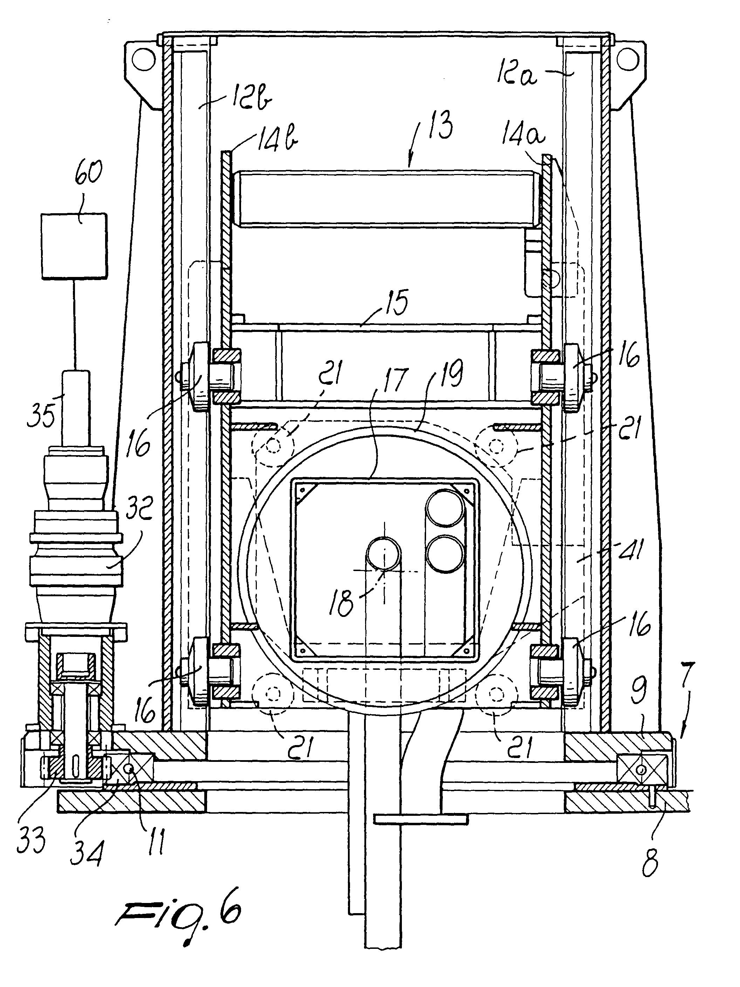

figure 6 is a schematic enlarged-scale sectional view of figure 4, taken along the plane VI-VI;
figure 7 is a partially sectional lateral elevation view of the lance.

### Ways of carrying out the Invention

With reference to the above figures, the apparatus according to the invention, generally designated by the reference numeral 1, comprises: a supporting structure 2 for at least one injection lance 3; means for moving the lance 3 along a substantially vertical direction; and first means for the oscillation of the lance 3 on a substantially vertical plane to vary the angle α of the jet delivered by the lance 3 relative to a horizontal plane, i.e., with respect to the free surface of the liquid metal 4 in the furnace 5.

The apparatus also advantageously comprises second means for the oscillation of the lance 3 about a vertical axis 6 and means for inserting and extracting the lance 3 relative to the furnace 5.

The apparatus according to the invention is provided with means for sensing the vertical elevation of the lance 3 and with means for delimiting the oscillation arc, i.e., the variation range of the angle α, as a function of the elevation of the lance 3.

More particularly, the supporting structure 2 of the lance 3 comprises a footing 7 that is composed of a lower supporting portion 8 and of an upper portion 9 that is supported by the lower portion so that it can rotate about a vertical axis 10 by means of a swivel ring 11.

Two vertical guides 12a and 12b rise from the upper portion 9, and a truck 13 is slidingly mounted on them; said truck is substantially composed of two vertical shoulders 14a and 14b that are joined by cross-members 15 and support, on their outer faces, sliding bearings 16 that couple to the guides 12a and 12b.

The truck 13 supports a beam 17, which is arranged so that its axis 18 lies horizontally and can rotate about said axis 18 relative to the truck 13.

The beam 17 in fact has a first wheel 19 proximate to one of its longitudinal ends and a second wheel 20 in a region that is spaced from said end; said wheels are connected to the beam 17 rigidly, for example by welding, and are arranged so that their axes coincide with the axis 18 of the beam.

The wheels 19 and 20 are supported by bearings 21 and 22 that are arranged around the wheels 19 and 20 and are supported by the cross-members 15 of the truck 13.

The beam 17 in turn supports, proximate to its end that lies opposite to the one supported by the truck 13, the lance 3, which is arranged transversely with respect to the beam 17.

The beam 17 supports the lance 3, so that it can rotate about a vertical axis that constitutes the axis 6, by means of bearings 23.

The lance 3 has an elongated body, in which an interspace 24 is formed; cooling water is circulated in said interspace in a per se known manner. A duct 25 runs inside the body of the lance 3 and is connected to means, not shown for the sake of simplicity, for supplying the fluid to be injected, for example oxygen; said duct also ends outside the lance 3 proximate to its tip, i.e., proximate to the end which lies opposite to the beam 17, through a delivery nozzle 26 whose axis is inclined downwards with respect to the longitudinal axis of the lance, substantially as in conventional lances.

In practice, in the apparatus according to the invention, an oscillation of the beam 17 about its axis 18 causes an oscillation of the lance 3 on a vertical plane, varying the angle α; a rotation of the upper portion 9 of the footing about the axis 10 varies the degree of insertion of the lance 3 in the furnace 5; and a sliding of the truck 13 along the guides 12a and 12b varies the elevation of the lance 3. Furthermore, as mentioned, the lance 3 can oscillate with respect to the beam 17 about the axis 6.

The means for the movement of the lance 3 along a substantially vertical direction comprise two hydraulic cylinders 30a and 30b that have vertical axes; said cylinders are connected to the upper portion 9 of the footing with their body and to the truck 13 with the stem 31a and 31b of their piston.

The means for sensing the elevation of the lance 3 can be constituted, for example, by a linear transducer 38, in which the fixed element is mounted on one of the guides 12a and 12b and the moving element is associated with, or connected to, the truck 13, or vice versa, so as to emit an electrical signal that is proportional, or in any case correlated, to the extent of the movement of the truck 13 along the guides 12a and 12b.

The means for inserting and extracting the lance 3 relative to the furnace 5 are conveniently constituted by a hydraulic gearmotor 32 that is mounted on the upper portion 9 of the footing and is provided, on its output shaft, with a pinion 33 that meshes with a ring gear 34 that is rigidly coupled to the lower portion 8; the axis of said ring gear coincides with the axis 10.

Advantageously, there are means for sensing the degree of insertion of the lance 3 in the furnace 5; said means are constituted by an encoder 35 that is connected to the output shaft of the gearmotor 32 so as to sense the rotation of the pinion 33 and therefore the width of the angle γ of rotation of the upper portion 9 of the footing relative to the lower portion 8 about the axis 10.

The first means for the oscillation of the lance 3 on a vertical plane comprise a hydraulic cylinder 40 that is pivoted to the shoulder 14a of the truck by means of the stem 40a of its piston and to a lug 41, which protrudes laterally from the beam 17, with its body, so that by actuating the hydraulic cylinder 40 the beam 17 is rotated about the axis 18.

Advantageously, there are means for sensing the rotation arc of the beam 17 about its own axis 18; said means can be constituted by a conventional inclinometer 42 applied to the beam 17. In practice, the inclinometer 42, by sensing the rotation angle of the beam 17 about the axis 18, senses the angle α.

The second means for the oscillation of the lance 3 about the axis 6 comprise a hydraulic gearmotor 50 that is mounted on the beam 17 and is provided, on its output shaft, with a gear 51 that meshes with a rack 52 supported by the beam 17 so that it can slide parallel to the axis 18.

The rack 52 is fixed to a rod 53 that is pivoted to an arm 54, which is rigidly coupled to the lance 3 and extends radially with respect to the axis 6. The actuation of the gearmotor 50 causes the oscillation of the lance 3 about the axis 6 in one direction or the other.

Means are advantageously provided for sensing the oscillation arc of the lance 3 about the axis 6; said means are constituted by an encoder 55 that is connected to the output shaft of the gearmotor 50. In practice, the encoder 55, by sensing the extent of the rotation of the gear 51, senses the width of the angle β of the oscillation of the lance about the axis 6.

The means for delimiting the oscillation arc of the lance 3 on a vertical plane include a preferably electronic control and monitoring element 60 that is constituted for example by a programmable microprocessor; its input is connected to the linear transducer 38, which senses the elevation of the truck 13 and therefore of the lance 3, and controls the actuation of the first means for the oscillation of the lance 3 on the vertical plane, so that a preset variation range of the angle α is not exceeded.

In practice, the actuation of the hydraulic cylinder 40 can be controlled manually, but the control and monitoring element 60 controls a valve 61 that is located on the supply circuit of the hydraulic cylinder 40 so that once an angle α at the limit of the preset variation range has been reached, the valve 61 is locked, assuredly preventing the angle α from increasing or decreasing further so as to leave the preset variation range and, so that said valve is releases only if the hydraulic cylinder 40 is actuated in the opposite direction, i.e, in the direction that causes the angle α to increase or decrease within the preset variation range.

The angle α is sensed constantly by the inclinometer 42, which is connected to the input of the control and monitoring element 60.

The input of the control and monitoring element 60 is connected to the encoder 35, which senses the angle γ, and to the encoder 55, which senses the angle β, and controls the actuation of the hydraulic gearmotor 32 and of the hydraulic gearmotor 50.

In practice, the actuation of the gearmotors 32 and 50 can be controlled manually and the control and monitoring element 60 can be programmed to cause manual commands to be ineffective if they produce rotations of the upper portion 9 of the footing and oscillations of the lance 3 about the axis 6 that lie outside the variation range of the preset angles γ and β.

In this manner, it is possible to delimit the variation range of the angle β as a function of the angle γ, to prevent the angle ^{α}min from being decreased beyond a preset value at γₘₐₓ, which is 90° in the illustrated embodiment, i.e, in the condition of maximum insertion of the lance 3 in the furnace 5; in other words, to prevent the lance 3 from being raised excessively, causing delivery of the oxygen jet above the slag 70 that lies on the free surface of the liquid metal 4, which would cause the projection of sprays of liquid metal onto the half-shaft and onto the roof, with consequent damage to these parts of the furnace.

Again with the possibility of delimiting the variation range of the angle α as a function of the angle γ, it is possible to prevent the angle ^{α}max from being increased beyond a preset value at γ_{min'} which is approximately 65° in the illustrated embodiment, i.e., in the condition of minimum insertion of the lance 3 in the furnace 5; in other words, prevent the lance 3 from being lowered excessively, with consequent excessive closeness to the scrap, which would produce electrical discharges between the lance and the scrap placed in the furnace.

The control and monitoring element 60 is also preferably connected to a display unit 65, for example a monitor or a liquid crystal display, on which the value of the sensed angle α and optionally of the angles β and γ is constantly reported to the operator.

The actuation of the apparatus according to the invention may also be fully automated, by providing for the direct actuation of the hydraulic cylinders 30a and 30b, of the hydraulic gearmotors 32 and 50, and of the hydraulic cylinder 40 on the part of the control and monitoring element 60 according to a preset program.

For the sake of completeness in description, it is to be noted that one or more secondary lances 80 for delivering coal dust or other fluids, according to the requirements, may be associated with the oxygen delivery lance 3.

Furthermore, the supply of the lance with oxygen and with cooling water, as well as the supply of any secondary lances 80, is performed by means of ducts 81 and 82 that run inside the truck 13 and the beam 17 and are provided, along their extension, with flexible parts and rotating conventional joints that are not described further for the sake of simplicity, to allow the movements of the elements that compose the apparatus according to the invention.

The operation of the apparatus according to the invention is as follows.

During the stage of cutting and heating the scrap introduced in the furnace 5, the lance 3 is placed at the desired elevation by means of the actuation of the hydraulic cylinders 30a and 30b and is inserted in the furnace 5 by means of the actuation of the gearmotor 32. During this phase, by taking advantage of the possibility of varying the elevation of the lance 3 by means of the hydraulic cylinders 30a and 30b, and of its possibility to oscillate upwards on a vertical plane by means of the actuation of the hydraulic cylinder 40, it is possible to move the lance 3 to the minimum elevation forced by the lower wall of the furnace opening 90 through which it is inserted, and swing the lance 3 upwards to the maximum extent allowed by the upper wall of the opening 90. The interference of the lance 3 with the walls of the opening 90 of the furnace is prevented by the limitations of the variation range of the angle α set by the control and monitoring element 60.

In this arrangement, with a conventional lance mounted on the apparatus according to the invention and with conventional furnaces, it is possible to achieve a minimum value of α that is equal to approximately 27-28°, i.e., an angle α that is significantly narrower than the angle α allowed by conventional apparatuses.

In this manner it is possible to perform cutting and heating of the scrap, by means of the oscillation of the lance 3 about the axis 6, on almost horizontal planes, achieving greater efficacy in the cutting and heating operation.

It should be noted that since the variation range of the angle β, i.e., the oscillation angle of the lance 3 about the axis 6, is limited as a function of the degree of insertion of the lance 3 in the furnace, i.e., as a function of the angle γ, the possibility of impacts against the side walls of the opening 90 of the furnace 5 is safely eliminated. In this manner, the operator can utilize without any problem the oscillation range about the axis 6 allowed to the lance 3 without constantly checking the position of the lance 3.

During this stage of the process, delimitation of the downward oscillation range of the lance 3, i.e., the angle αₘₐₓ, is determined by the control and monitoring element 60 also as a function of the angle γ to avoid an excessive approach of the lance 3 to the scrap, as already described.

During the refinement stage, the lance 3 can be moved, by means of the actuation of the hydraulic cylinders 30a and 30b, into the maximum elevation conditions, within the limitations set by the dimensions of the opening 90 of the furnace. In this case, too, the maximum elevation of the lance 3 can be delimited by the control and monitoring element 60, which causes the actuation of the cylinders 30a and 30b to be ineffective beyond a preset safety limit.

The lance 3 can swing downwards, within the limitations set by the presence of the lower wall of the opening 90, to inject oxygen into the liquid metal 4 through the overlying slag 70.

With conventional lance and furnaces, the apparatus according to the invention allows to achieve an angle of impact α with the surface of the liquid metal that is equal to approximately 52°, achieving better results than that allowed by conventional devices as regards decarburization.

During the refinement stage, the variation range of the angle α is delimited by the control and monitoring element 60 as a function of the elevation of the lance 3 and of its degree of insertion in the furnace, i.e., as a function of the angle γ, to prevent the lance 3 from colliding with the upper and lower walls of the furnace opening 90 and to prevent, as mentioned, the oxygen jet from being delivered above the slag 70.

During this stage, the operator can monitor the value of the angle α on the display 65, modifying it until the optimum angle α is achieved.

In practice it has been observed that the apparatus according to the invention fully achieves the intended aim, as it allows to achieve greater efficacy, both during cutting and heating of the scrap and during refinement, with respect to conventional lance movement apparatuses.

Furthermore, by virtue of the preset delimitation of the lance movement parameters, it ensures greater safety, making it independent of the skill and attention of the operator.

Another advantage of the apparatus according to the invention is that it allows to vary the elevation of the lance as a function of the slag-off level, i.e., of the level of solidified slag at the insertion opening, which can gradually increase and makes it difficult to insert the lance in the furnace with conventional apparatuses.

The apparatus thus conceived is susceptible of numerous modifications and variations, all of which are within the scope of the inventive concept; all the details may furthermore be replaced with other technically equivalent elements.

The values of the angles α and γ mentioned in the present description have been given merely by way of indication and to better point out the advantages of the apparatus according to the invention relative to conventional apparatuses. Since these angles are correlated to the geometry of the lance and to the dimensions of the opening of the furnace, they may of course vary when these parameters vary.

Furthermore, the apparatus according to the invention, although conceived particularly for injecting oxygen, can in any case be used advantageously for the injection of other fluids or of particulates, such as for example coal dust.

In practice, the materials employed, as well as the dimensions, may be any according to the requirements and the state of the art.

## Claims

1. An apparatus for injecting gases or fluids in general and particulates, particularly for injecting oxygen, in furnaces for the production of steel, comprising a structure (2) for supporting at least one injection lance (3), and first means (40) for the oscillation of said lance on a substantially vertical plane to vary the angle of impact (α) of the jet delivered by said injection lance (3) relative to a horizontal plane, characterized in that said supporting structure (2) comprises a footing (7) with an upper portion (9) that has two vertical guides (12a, 12b) that slidingly support a truck (13), said truck supporting a beam (17) that lies along a substantially horizontal axis and supports, proximate to one of its ends, said lance, which is arranged transversely to said beam, said beam being rotatable about its own axis, and in that the apparatus comprises first means (40) for moving said injection lance along a substantially vertical direction and second means (50, 51, 52) for the oscillation of said lance (3) about a substantially vertical axis (6) and in that said oscillation of the lance by means of said first means (40) occurs both upwards and downwards from said horizontal plane, said first means comprising a fluid-actuated cylinder (40) pivoted to the truck (13) and to a lug (41) which protrudes laterally from said beam, said second means comprising a gearmotor (50) mounted on the beam and provided with a rack-and-pinion transmission (51,52) to act on the lance (3).

2. The apparatus according to claim 1, characterized in that it comprises means (60) for delimiting the oscillation arc of said lance (3) on said substantially vertical plane.

3. The apparatus according to claims 1 and 2, characterized in that it comprises means (55) for sensing the elevation of said lance.

4. The apparatus according to one or more of the preceding claims, characterized in that said means (60) for delimiting the oscillation arc of said lance on said vertical plane are operatively connected to said means (55) for sensing the elevation of said lance (3) to delimit the arc of the oscillation of the lance on said vertical plane as a function of its elevation.

5. The apparatus according to one or more of the preceding claims, characterized in that it comprises means (32, 33, 34) for inserting and extracting said lance (3) relative to said furnace (5).

6. The apparatus according to one or more of the preceding claims, characterized in that it comprises means (35) for sensing the degree of insertion of said lance (3) in the furnace (5).

7. The apparatus according to one or more of the preceding claims, characterized in that it comprises means for delimiting the oscillation arc of said lance (3) about said substantially vertical axis (6).

8. The apparatus according to one or more of the preceding claims, characterized in that said means for delimiting the oscillation arc of said lance (3) about said substantially vertical axis are operatively connected to said means (35) for sensing the degree of the insertion of said lance in the furnace in order to delimit the oscillation arc of said lance about said substantially vertical axis (6) as a function of the degree of insertion of the lance in the furnace.

9. The apparatus according to one or more of the preceding claims, characterized in that said means (60) for delimiting the arc of the oscillation of said lance on said vertical plane are operatively connected to said means (35) for sensing the degree of insertion of said lance (3) in the furnace (5), in order to delimit the arc of the oscillation of said lance on said vertical plane as a function of the degree of insertion of the lance in the furnace.

10. The apparatus according to one or more of the preceding claims, characterized in that said means for moving said lance along said substantially vertical direction comprise a pair of fluid-actuated cylinders (30a, 30b) that are connected to the upper portion (9) of said footing (7) and act on command on said truck (13) to move it along said vertical guides (12a, 12b).

11. The apparatus according to one or more of the preceding claims, characterized in that said means (38) for sensing the elevation of said lance (3) comprise means for sensing the position of said truck (13) along said vertical guides (12a, 12b).

12. The apparatus according to one or more of the preceding claims, characterized in that said fluid-actuated cylinder (40) is mounted on said truck (13) and acts on said beam (17) to rotate it about its axis relative to said truck.

13. The apparatus according to one or more of the preceding claims, characterized in that it comprises means (42) for sensing the rotation arc of said beam (17) about its own axis (18).

14. The apparatus according to one or more of the preceding claims, characterized in that said beam (17) supports said lance (3) so that it can rotate about a substantially vertical axis (6).

15. The apparatus according to one or more of the preceding claims, characterized in that said gearmotor (50) acts, by means of said rack-and-pinion transmission, on said lance (3) for its oscillation about said substantially vertical axis (6) relative to said beam.

16. The apparatus according to one or more of the preceding claims, characterized in that it comprises means (55) for sensing the arc of the oscillation of said lance about said substantially vertical axis (6).

17. The apparatus according to one or more of the preceding claims, characterized in that said means for sensing the arc of the oscillation of said lance about said substantially vertical axis are constituted by an encoder (55) that senses the rotation of the output shaft of said gearmotor (50) that acts on said lance (3).

18. The apparatus according to one or more of the preceding claims, characterized in that said footing (7) comprises a lower supporting portion (8) and an upper portion (9) that supports said vertical guides (12a, 12b), said upper portion being supported by said lower portion so that it can rotate about a vertical axis (10).

19. The apparatus according to one or more of the preceding claims, characterized in that said means for inserting and extracting the lance relative to the furnace comprise a gearmotor (32) that is mounted on the upper portion (9) of said footing (7) and actuates a pinion (33) that meshes with a ring gear (34) that is fixed to said lower portion of the footing about the vertical axis of rotation of said upper portion of the footing relative to the lower portion.

20. The apparatus according to one or more of the preceding claims, characterized in that it comprises means for sensing the arc of the rotation of said upper portion (9), about said vertical axis, relative to said lower portion (8) of the footing (7).

21. The apparatus according to one or more of the preceding claims, characterized in that said means for sensing the degree of insertion of said lance in the furnace comprise an encoder (35) that is connected to said gearmotor (32) that actuates the rotation of the upper portion (9) of the footing (7) relative to the lower portion (8).

22. The apparatus according to one or more of the preceding claims, characterized in that said means for delimiting the arc of the oscillation of said lance in said substantially vertical plane comprise an electronic control and monitoring element (60) that is operatively connected to said means (38) for sensing the elevation of said lance and controls the actuation of said means for the oscillation of the lance in said substantially vertical plane.

23. The apparatus according to one or more of the preceding claims, characterized in that said means for delimiting the arc of the oscillation of said lance about said substantially vertical axis comprise said electronic control and monitoring element (60), said control and monitoring element being operatively connected to said means (35) for sensing the degree of insertion of said lance (3) in the furnace (5) and controlling the actuation of said second means (50) for the oscillation of said lance about the substantially vertical axis (6).

24. The apparatus according to one or more of the preceding claims, characterized in that said control and monitoring element (60) is operatively connected to said means (42) for sensing the arc of the rotation of said beam (17) about its own axis and to said means for sensing the arc of the oscillation of said lance (3) about said substantially vertical axis (6).

25. The apparatus according to one or more of the preceding claims, characterized in that said electronic control and monitoring element (60) is constituted by a programmable microprocessor.

26. The apparatus according to one or more of the preceding claims, characterized in that said electronic control and monitoring element (60) is connected to a unit (65) for displaying the arc of the oscillation of said lance on said substantially vertical plane.

27. The apparatus according to one or more of the preceding claims, characterized in that said electronic control and monitoring element (60) is connected to a unit (65) for displaying the arc of the oscillation of said lance about said substantially vertical axis (6).

28. The apparatus according to one or more of the preceding claims, characterized in that said electronic control and monitoring element (60) is connected to a unit for displaying the arc of the rotation of said upper portion (9) of the footing (7) relative to said lower portion (8) about said substantially vertical axis (10).

## Patentansprüche

1. Vorrichtung zum Einblasen von Gasen oder Fluiden im allgemeinen sowie von aus Partikeln bestehenden Stoffen, insbesondere zum Einblasen von Sauerstoff in Öfen zur Stahlerzeugung, mit einer Konstruktion (2) zum Halten zumindest einer Einblaslanze (3) und ersten Mitteln (40) zum Schwenken der Lanze in einer im wesentlichen vertikalen Ebene, um den Auftreffwinkel (α) des von der Einblaslanze (3) abgegebenen Strahls relativ zu einer horizontalen Ebene zu verändern, dadurch **gekennzeichnet**, daß die Haltekonstruktion (2) einen Fuß (7) mit einem oberen Teil (9) enthält, welcher zwei vertikale Führungen (12a, 12b) hat, die einen Wagen (13) verschiebbar tragen, der seinerseits einen Träger (17) trägt, welcher entlang einer im wesentlichen horizontalen Achse angeordnet ist und in der Nähe eines seiner Enden die quer zu dem um seine Achse drehbaren Träger angeordnete Lanze hält, und daß die Vorrichtung erste Mittel (40) zum Bewegen der Einblaslanze in einer im wesentlichen vertikalen Richtung und zweite Mittel (50, 51, 52) zum Schwenken der Lanze (3) um eine im wesentlichen vertikale Achse (6) enthält, und daß das Schwenken der Lanze durch die ersten Mittel (40) von der horizontalen Ebene aus sowohl nach oben als auch nach unten erfolgt, wobei die ersten Mittel einen fluidbetätigten Zylinder (40) enthalten, der schwenkbar mit dem Träger (13) sowie mit einem Vorsprung (41) verbunden ist, der seitlich von dem Träger absteht, und wobei die zweiten Mittel einen Getriebemotor (50) enthalten, der an dem Träger befestigt ist und zum Einwirken auf die Lanze (3) eine Zahnstangenübertragung (51, 52) hat.

2. Vorrichtung nach Anspruch 1, **gekennzeichnet** durch Mittel (60) zum Begrenzen des Schwenkbogens der Lanze (3) in der im wesentlichen vertikalen Ebene.

3. Vorrichtung nach den Ansprüchen 1 und 2, **gekennzeichnet** durch Mittel (55) zum Erfassen der Höhe der Lanze.

4. Vorrichtung nach einem oder mehreren der vorhergehenden Ansprüche, dadurch **gekennzeichnet**, daß die Mittel (60) zum Begrenzen des Schwenkbogens der Lanze in der vertikalen Ebene mit den Mitteln (55) zum Erfassen der Höhe der Lanze (3) wirksam verbunden sind, um den Schwenkbogen der Lanze in der vertikalen Ebene in Abhängigkeit ihrer Höhe zu begrenzen.

5. Vorrichtung nach einem oder mehreren der vorhergehenden Ansprüche, **gekennzeichnet** durch Mittel (32, 33, 34) zum Einführen und Herausziehen der Lanze (3) in den bzw. aus dem Ofen (5).

6. Vorrichtung nach einem oder mehreren der vorhergehenden Ansprüche, **gekennzeichnet** durch Mittel (35) zum Erfassen des Grades, zu dem die Lanze (3) in den Ofen (5) eingeführt ist.

7. Vorrichtung nach einem oder mehreren der vorhergehenden Ansprüche, **gekennzeichnet** durch Mittel zum Begrenzen des Schwenkbogens der Lanze (3) um die im wesentlichen vertikale Achse (6).

8. Vorrichtung nach einem oder mehreren der vorhergehenden Ansprüche, dadurch **gekennzeichnet**, daß die Mittel zum Begrenzen des Schwenkbogens der Lanze (3) um die im wesentlichen vertikale Achse wirksam mit den Mitteln (35) zum Erfassen des Grades, zu dem die Lanze in den Ofen eingeführt ist, verbunden sind, um den Schwenkbogen der Lanze um die im wesentlichen vertikale Achse (6) in Abhängigkeit des Grades zu begrenzen, zu dem die Lanze in den Ofen eingeführt ist.

9. Vorrichtung nach einem oder mehreren der vorhergehenden Ansprüche, dadurch **gekennzeichnet**, daß die Mittel (60) zum Begrenzen des Schwenkbogens der Lanze in der vertikalen Ebene wirksam mit den Mitteln (35) zum Erfassen des Grades, zu dem die Lanze (3) in den Ofen (5) eingeführt ist, verbunden sind, um den Schwenkbogen der Lanze in der vertikalen Ebene in Abhängigkeit des Grades zu begrenzen, zu dem die Lanze in den Ofen eingeführt ist.

10. Vorrichtung nach einem oder mehreren der vorhergehenden Ansprüche, dadurch **gekennzeichnet**, daß die Mittel zum Bewegen der Lanze in der im wesentlichen vertikalen Richtung ein Paar fluidbetätigter Zylinder (30a, 30b) enthalten, die mit dem oberen Teil (9) des Fußes (7) verbunden sind und bei Aktivierung auf den Wagen (13) einwirken, um ihn an den vertikalen Führungen (12a, 12b) entlang zu bewegen.

11. Vorrichtung nach einem oder mehreren der vorhergehenden Ansprüche, dadurch **gekennzeichnet**, daß die Mittel (38) zum Erfassen der Höhe der Lanze (3) Mittel zum Erfassen der Position des Wagens (13) an den vertikalen Führungen (12a, 12b) haben.

12. Vorrichtung nach einem oder mehreren der vorhergehenden Ansprüche, dadurch **gekennzeichnet**, daß der fluidbetätigte Zylinder (40) an dem Wagen (13) befestigt ist und auf den Träger (17) einwirkt, um diesen relativ zu dem Wagen zu drehen.

13. Vorrichtung nach einem oder mehreren der vorhergehenden Ansprüche, **gekennzeichnet** durch Mittel (42) zum Erfassen des Drehbogens des Trägers (17) um seine Achse (18).

14. Vorrichtung nach einem oder mehreren der vorhergehenden Ansprüche, dadurch **gekennzeichnet**, daß der Träger (17) die Lanze (3) so hält, daß sie um eine im wesentlichen vertikale Achse (6) drehbar ist.

15. Vorrichtung nach einem oder mehreren der vorhergehenden Ansprüche, dadurch **gekennzeichnet**, daß der Getriebemotor (50) über eine Zahnstangenübertragung auf die Lanze (3) einwirkt, um diese um die im wesentlichen vertikale Achse (6) relativ zu dem Träger zu schwenken.

16. Vorrichtung nach einem oder mehreren der vorhergehenden Ansprüche, **gekennzeichnet** durch Mittel (55) zum Erfassen des Schwenkbogens der Lanze um die im wesentlichen vertikale Achse (6).

17. Vorrichtung nach einem oder mehreren der vorhergehenden Ansprüche, dadurch **gekennzeichnet**, daß die Mittel zum Erfassen des Schwenkbogens der Lanze um die im wesentlichen vertikale Achse aus einer Codiereinrichtung (55) bestehen, die die Drehung der auf die Lanze (3) einwirkenden Abtriebswelle des Getriebemotors (50) erfaßt.

18. Vorrichtung nach einem oder mehreren der vorhergehenden Ansprüche, dadurch **gekennzeichnet**, daß der Fuß (7) einen unteren Trageteil (8) und einen oberen Teil (9) enthält, der die vertikalen Führungen (12a, 12b) trägt, wobei der obere Teil so von dem unteren Teil getragen ist, daß er um eine vertikale Achse (10) drehbar ist.

19. Vorrichtung nach einem oder mehreren der vorhergehenden Ansprüche, dadurch **gekennzeichnet**, daß die Mittel zum Einführen und Herausziehen der Lanze in den bzw. aus dem Ofen einen Getriebemotor (32) enthalten, der an dem oberen Teil (9) des Fußes (7) befestigt ist und ein Ritzel (33), welches mit einem an dem unteren Teil des Fußes befestigten Tellerrad (34) in Eingriff steht, um die vertikale Drehachse des oberen Teils des Fußes relativ zu dem unteren Teil antreibt.

20. Vorrichtung nach einem oder mehreren der vorhergehenden Ansprüche, **gekennzeichnet** durch Mittel zum Erfassen des Drehbogens des oberen Teils (9) um die vertikale Achse relativ zum dem unteren Teil (8) des Fußes (7).

21. Vorrichtung nach einem oder mehreren der vorhergehenden Ansprüche, dadurch **gekennzeichnet**, daß die Mittel zum Erfassen des Grades, zu dem die Lanze in den Ofen eingeführt ist, eine Codiereinrichtung (35) enthalten, die mit dem Getriebemotor (32) verbunden ist, welcher die Drehung des oberen Teils (9) des Fußes (7) relativ zu dem unteren Teil (8) bewirkt

22. Vorrichtung nach einem oder mehreren der vorhergehenden Ansprüche, dadurch **gekennzeichnet**, daß die Mittel zum Begrenzen des Schwenkbogens der Lanze in der im wesentlichen vertikalen Ebene ein elektronisches Steuer- und Überwachungselement (60) enthalten, das wirksam mit den Mitteln (38) zum Erfassen der Höhe der Lanze verbunden ist und die Betätigung der Mittel zum Schwenken der Lanze in der im wesentlichen vertikalen Ebene steuert.

23. Vorrichtung nach einem oder mehreren der vorhergehenden Ansprüche, dadurch **gekennzeichnet**, daß die Mittel zum Begrenzen des Schwenkbogens der Lanze um die im wesentlichen vertikale Achse das elektronische Steuer- und Überwachungselement (60) enthalten, wobei das Steuer- und Überwachungselement wirksam mit den Mitteln (35) zum Erfassen des Grades, zu dem die Lanze (3) in den Ofen (5) eingeführt ist, verbunden ist und die Betätigung der zweiten Mittel (50) zum Schwenken des Lanze um die im wesentlichen vertikale Achse (6) steuert.

24. Vorrichtung nach einem oder mehreren der vorhergehenden Ansprüche, dadurch **gekennzeichnet**, daß das Steuer- und Überwachungselement (60) wirksam mit den Mitteln (42) zum Erfassen des Drehbogens des Trägers (17) um seine Achse sowie mit den Mitteln zum Erfassen des Schwenkbogens der Lanze (3) um die im wesentlichen vertikale Achse (6) verbunden ist.

25. Vorrichtung nach einem oder mehreren der vorhergehenden Ansprüche, dadurch **gekennzeichnet,** daß das elektronische Steuer- und Überwachungselement (60) ein programmierbarer Mikroprozessor ist.

26. Vorrichtung nach einem oder mehreren der vorhergehenden Ansprüche, dadurch **gekennzeichnet,** daß das elektronische Steuer- und Überwachungselement (60) mit einer Einheit (65) zum Anzeigen des Schwenkbogens der Lanze in der im wesentlichen vertikalen Ebene verbunden ist.

27. Vorrichtung nach einem oder mehreren der vorhergehenden Ansprüche, dadurch **gekennzeichnet,** daß das elektronische Steuer- und Überwachungselement (60) mit einer Einheit (65) zum Anzeigen des Schwenkbogens der Lanze um die im wesentlichen vertikale Achse (6) verbunden ist.

28. Vorrichtung nach einem oder mehreren der vorhergehenden Ansprüche, dadurch **gekennzeichnet,** daß das elektronische Steuer- und Überwachungselement (60) mit einer Einheit zum Anzeigen des Drehbogens des oberen Teils (9) des Fußes (7) relativ zu dem unteren Teil (8) um die im wesentlichen vertikale Achse (10) verbunden ist.

## Revendications

1. Appareil d'injection de gaz ou de fluides sous forme normale ou particulaire, particulièrement d'injection d'oxygène, dans des fours pour la production d'acier, comprenant une structure (2) pour supporter au moins une lance d'injection (3), et des premiers moyens (40) pour l'oscillation de ladite lance dans un plan sensiblement vertical pour varier l'angle d'impact (α) du jet délivré par ladite lance d'injection (3) par rapport à un plan horizontal,
caractérisé en ce que ladite structure de support (2) comprend un socle (7) ayant une portion supérieure (9) qui présente deux guides verticaux (12a, 12b) qui supportent de façon coulissante un chariot (13), ledit chariot supportant une flèche (17) qui s'étend le long d'un axe sensiblement horizontal et supporte, à proximité de l'une de ses extrémités, ladite lance, qui est agencée transversalement à ladite flèche, ladite flèche pouvant tourner autour de son propre axe, et en ce que l'appareil comprend des premiers moyens (40) pour déplacer ladite lance d'injection le long d'une direction sensiblement verticale et des seconds moyens (50, 51, 52) pour l'oscillation de ladite lance (3) autour d'un axe sensiblement vertical (6) et en ce que ladite oscillation de la lance par l'intermédiaire desdits premiers moyens (40) a lieu à la fois vers le haut et vers le bas à partir dudit plan horizontal, lesdits premiers moyens comprenant un vérin actionné par fluide (40) articulé au chariot (13) et à une patte (41) qui fait saillie latéralement de ladite flèche, lesdits seconds moyens comprenant un motoréducteur (50) monté sur la flèche et muni d'une transmission par crémaillère (51, 52) pour agir sur la lance (3).

2. Appareil selon la revendication 1,
caractérisé en ce qu'il comprend des moyens (60) pour délimiter l'arc d'oscillation de ladite lance (3) dans ledit plan sensiblement vertical.

3. Appareil selon les revendications 1 et 2,
caractérisé en ce qu'il comprend des moyens (55) pour détecter l'élévation de ladite lance.

4. Appareil selon l'une ou plusieurs des revendications précédentes,
caractérisé en ce que lesdits moyens (60) pour délimiter l'arc d'oscillation de ladite lance dans ledit plan vertical sont reliés, de façon opératoire, auxdits moyens (55) pour détecter l'élévation de ladite lance (3) de façon à délimiter l'arc d'oscillation de la lance dans ledit plan vertical en fonction de son élévation.

5. Appareil selon l'une ou plusieurs des revendications précédentes,
caractérisé en ce qu'il comprend des moyens (32, 33, 34) pour insérer et extraire ladite lance (3) par rapport audit four (5).

6. Appareil selon l'une ou plusieurs des revendications précédentes,
caractérisé en ce qu'il comprend des moyens (35) pour détecter le degré d'insertion de ladite lance (3) dans le four (5).

7. Appareil selon l'une ou plusieurs des revendications précédentes,
caractérisé en ce qu'il comprend des moyens pour délimiter l'arc d'oscillation de ladite lance (3) autour dudit axe sensiblement vertical (6).

8. Appareil selon l'une ou plusieurs des revendications précédentes,
caractérisé en ce que lesdits moyens pour délimiter l'arc d'oscillation de ladite lance (3) autour dudit axe sensiblement vertical sont reliés, de façon opératoire, auxdits moyens (35) pour détecter le degré d'insertion de ladite lance dans le four, de façon à délimiter l'arc d'oscillation de ladite lance autour dudit axe sensiblement vertical (6) en fonction du degré d'insertion de la lance dans le four.

9. Appareil selon l'une ou plusieurs des revendications précédentes,
caractérisé en ce que lesdits moyens (60) pour délimiter l'arc d'oscillation de ladite lance dans ledit plan vertical sont reliés, de façon opératoire, auxdits moyens (35) pour détecter le degré d'insertion de ladite lance (3) dans le four (5), de façon à délimiter l'arc d'oscillation de ladite lance dans ledit plan vertical en fonction du degré d'insertion de la lance dans le four.

10. Appareil selon l'une ou plusieurs des revendications précédentes,
caractérisé en ce que lesdits moyens pour déplacer ladite lance le long de ladite direction sensiblement verticale comprennent une paire de vérins actionnés par fluide (30a, 30b)qui sont reliés à la portion supérieure (9) dudit socle (7) et agissent, sur ordre, sur ledit chariot (13) pour le déplacer le long desdits guides verticaux (12a, 12b).

11. Appareil selon l'une ou plusieurs des revendications précédentes,
caractérisé en ce que lesdits moyens (38) pour détecter l'élévation de ladite lame (3) comprennent des moyens pour détecter la position dudit chariot (13) le long desdits guides verticaux (12a, 12b).

12. Appareil selon l'une ou plusieurs des revendications précédentes,
caractérisé en ce que ledit vérin actionné par fluide (40) est monté sur ledit chariot (13) et agit sur ladite flèche (17) pour la faire tourner autour de son axe par rapport audit chariot.

13. Appareil selon l'une ou plusieurs des revendications précédentes,
caractérisé en ce qu'il comprend des moyens (42) pour détecter l'arc de rotation de ladite flèche (17) autour de son propre axe (18).

14. Appareil selon l'une ou plusieurs des revendications précédentes,
caractérisé en ce que ladite flèche (17) supporte ladite lance (3) de sorte qu'elle peut tourner autour d'un axe sensiblement vertical (6).

15. Appareil selon l'une ou plusieurs des revendications précédentes,
caractérisé en ce que ledit motoréducteur (50) agit, par l'intermédiaire de ladite transmission par crémaillère, sur ladite lance (3) pour son oscillation autour dudit axe sensiblement vertical (6) par rapport à ladite flèche.

16. Appareil selon l'une ou plusieurs des revendications précédentes,
caractérisé en ce qu'il comprend des moyens (55) pour détecter l'arc d'oscillation de ladite lance autour dudit axe sensiblement vertical (6).

17. Appareil selon l'une ou plusieurs des revendications précédentes,
caractérisé en ce que lesdits moyens pour détecter l'arc d'oscillation de ladite lance autour dudit axe sensiblement vertical sont constitués par un encodeur (55) qui détecte la rotation de l'arbre de sortie dudit motoréducteur (50) qui agit sur ladite lance (3).

18. Appareil selon l'une ou plusieurs des revendications précédentes,
caractérisé en ce que ledit socle (7) comprend une portion de support inférieure (8) et une portion supérieure (9) qui supporte lesdits guides verticaux (12a, 12b), ladite portion supérieure étant supportée par ladite portion inférieure de sorte qu'elle peut tourner autour d'un axe vertical (10).

19. Appareil selon l'une ou plusieurs des revendications précédentes,
caractérisé en ce que lesdits moyens pour insérer et extraire la lance par rapport au four comprennent un motoréducteur (32) qui est monté sur la portion supérieure (9) dudit socle (7) et actionne un pignon (33) qui s'engrène avec une couronne dentée (34) qui est fixée à ladite portion inférieure du socle autour de l'axe vertical de rotation de ladite portion supérieure du socle par rapport à la portion inférieure.

20. Appareil selon l'une ou plusieurs des revendications précédentes,
caractérisé en ce qu'il comprend des moyens pour détecter l'arc de rotation de ladite portion supérieure (9), autour dudit axe vertical, par rapport à ladite portion inférieure (8) du socle (7).

21. Appareil selon l'une ou plusieurs des revendications précédentes,
caractérisé en ce que lesdits moyens pour détecter le degré d'insertion de ladite lance dans le four comprennent un encodeur (35) qui est relié audit motoréducteur (32) qui actionne la rotation de la portion supérieure (9) du socle (7) par rapport à la portion inférieure (8).

22. Appareil selon l'une ou plusieurs des revendications précédentes,
caractérisé en ce que lesdits moyens pour délimiter l'arc d'oscillation de ladite lance dans ledit plan sensiblement vertical comprennent un élément de commande et de contrôle électronique (60) qui est relié, de façon opératoire, auxdits moyens (38) pour détecter l'élévation de ladite lance et commande l'actionnement desdits moyens pour l'oscillation de la lance dans ledit plan sensiblement vertical.

23. Appareil selon l'une ou plusieurs des revendications précédentes,
caractérisé en ce que lesdits moyens pour délimiter l'arc d'oscillation de adite lance autour dudit axe sensiblement vertical comprennent ledit élément de commande et de contrôle électronique (60), ledit élément de contrôle et de commande étant relié, de façon opératoire, auxdits moyens (35) pour détecter le degré d'insertion de ladite lance (3) dans le four (5) et commander l'actionnement desdits seconds moyens (50) pour l'oscillation de ladite lance autour de l'axe sensiblement vertical (6).

24. Appareil selon l'une ou plusieurs des revendications précédentes,
caractérisé en ce que ledit élément de contrôle et de commande (60) est relié, de façon opératoire, auxdits moyens (42) pour détecter l'arc de rotation de ladite flèche (17) autour de son propre axe et auxdits moyens pour détecter l'arc d'oscillation de ladite lance (3) autour dudit axe sensiblement vertical (6).

25. Appareil selon l'une ou plusieurs des revendications précédentes,
caractérisé en ce que ledit élément de contrôle et de commande électronique (60) est constitué par un microprocesseur programmable.

26. Appareil selon l'une ou plusieurs des revendications précédentes,
caractérisé en ce que ledit élément de contrôle et de commande électronique (60) est relié à une unité (65) pour afficher l'arc d'oscillation de ladite lance dans ledit plan sensiblement vertical.

27. Appareil selon l'une ou plusieurs des revendications précédentes,
caractérisé en ce que ledit élément de contrôle et de commande électronique (60) est relié à une unité (65) pour afficher l'arc d'oscillation de ladite lance autour dudit axe sensiblement vertical (6).

28. Appareil selon l'une ou plusieurs des revendications précédentes,
caractérisé en ce que ledit élément de contrôle et de commande électronique (60) est relié à une unité pour afficher l'arc de rotation de ladite portion supérieure (9) du socle (7) par rapport à ladite portion inférieure (8) autour dudit axe sensiblement vertical (10).
